# EUROPÄISCHE PATENTANMELDUNG

(11) **EP 4 083 460 A1**
(43) Veröffentlichungstag der Anmeldung: **02.11.2022**
(21) Anmeldenummer: 21170466.3
(22) Anmeldetag: 26.04.2021
(51) Int. Cl.: F16D 3/68

(54) **SCHALLGENERATOR FÜR EINE WELLENKUPPLUNG UND WELLENKUPPLUNG**

(71) Anmelder: Siemens Aktiengesellschaft, 80333 München (DE)
(72) Erfinder: Bormann, Ulf, 90518 Altdorf (DE); Nolting, Christoph, 91315 Höchstadt/Aisch (DE); Scheibner, Dirk, 90473 Nürnberg (DE); Schimmer, Jürgen, 90473 Nürnberg (DE); Zettner, Jürgen, 90587 Veitsbronn (DE)

(57) **Zusammenfassung**

Die Erfindung betrifft einen Schallgenerator (200) für eine Wellenkupplung (5), aufweisend: wenigstens einen Verformkörper (52) und wenigstens eine Pfeiftoneinheit (82), wobei bei Druck auf den Verformkörper (52) sich der Verformkörper (52) derart verformt, dass die Pfeiftoneinheit (82) einem Gasstrom, insbesondere Luftstrom, ausgesetzt ist, wobei die Pfeiftoneinheit (82) derart ausgebildet ist, dass sie bei Auftreffen des Gasstroms eine Schallwelle (81) erzeugt. Die Erfindung betrifft ferner eine Wellenkupplung (5), ein System (100) und ein Verfahren.

## Beschreibung

In industriellen Anlagen ist eine präzise Ausrichtung eines antreibenden Motors zur Last besonders wichtig, da bei Ausrichtfehlern Belastungen auf Lagerstellen und Wellenkupplung wirken, die zu frühzeitigem Verschleiß und Ausfällen führen.

Die Wellenkupplung dient einer Verbindung vom Motor zur Last. Ausrichtfehler im Antriebsstrang haben dynamische Kräfte zur Folge. Solche Fehler sind als Kraftwirkung auf die Wellenkupplung zu erkennen.

Im Betrieb ist daher eine periodische Kontrolle der Ausrichtung von Vorteil. Dies gelingt beispielsweise mit Haarlineal und Fühlerlehre.

Jedoch ist dies mit einer Abschaltung des Systems und einem hohen Arbeitsaufwand verbunden.

Der Erfindung liegt die Aufgabe zugrunde, Ausrichtfehler sicher und ohne Aufwand zu erkennen.

Die Lösung der Aufgabe gelingt durch Anspruch 1, d. h. einen Schallgenerator für eine Wellenkupplung, aufweisend:
- wenigstens einen Verformkörper und
- wenigstens eine Pfeiftoneinheit, wobei bei Druck auf den Verformkörper sich der Verformkörper derart verformt, dass die Pfeiftoneinheit einem Gasstrom, insbesondere Luftstrom, ausgesetzt ist, wobei die Pfeiftoneinheit derart ausgebildet ist, dass sie bei Auftreffen des Gasstroms eine Schallwelle erzeugt.

Die Fehlausrichtung der beiden Wellen führt vorteilhaft zu einem Druck auf den Verformkörper. Die Wellen rotieren bei einer Fehlausrichtung zudem nicht mehr gleichmäßig, sondern rotieren ungleichmäßig bzw. schlingern.

Der Verformkörper wird dadurch durchgewalkt bzw. immer wieder gequetscht bzw. geknetet.

Der Verformkörper ist beispielsweise ein Balg. Der Balg ist vorteilhaft im Gutzustand mit Luft gefüllt. Durch Druck auf den Balg wird vorteilhaft die Luft herausgedrückt.

Vorteilhaft ist eine Ausführungsform, wonach die Schallwelle eine Ultraschallwelle ist.

Ultraschall schließt vorteilhaft Frequenzen von 20 kHz bis 10 GHz ein.

Dies hat den Vorteil, dass Personen, die sich in der Nähe aufhalten nicht gestört werden.

Jedoch sind auch andere Schallwellen möglich, auch solche, die für das menschliche Ohr erkennbar sind.

Vorteilhaft ist eine Ausführungsform, wonach der Verformkörper wenigstens ein Elastomer aufweist.

Vorteilhaft ist eine Ausführungsform, wonach der Verformkörper Silikon aufweist.

Silikon ist besonders geeignet. Jedoch sind auch ganz allgemein Elastomere geeignet.

Ein Material des Verformkörpers ist vorteilhaft ein elastisch verformbares Material ohne plastische Formänderung über eine hohe Anzahl von Belastungszyklen.

Vorteilhaft ist eine Ausführungsform, wonach die Pfeiftoneinheit eine Eintrittsöffnung zum Eintritt eines Gases, insbesondere Luft, aufweist.

Durch das Durchwalken gelangt vorteilhaft immer wieder Luft durch die Eintrittsöffnung in die Pfeiftoneinheit.

Vorteilhaft ist eine Ausführungsform, wonach die Pfeiftoneinheit eine Austrittsöffnung zum Austritt der Schallwelle aufweist.

Vorteilhaft ist eine Ausführungsform, wonach die Pfeiftoneinheit wenigstens eine Kante zur Bildung einer stehenden Welle aufweist.

Vorteilhaft ist eine Ausführungsform, wonach die Pfeiftoneinheit wenigstens einen Resonanzraum aufweist.

Die Pfeiftoneinheit erzeugt vorteilhaft einen Ton, indem ein Luftstrom auf eine Kante trifft und die Luft in einem anschließenden Hohlraum in Schwingungen versetzt. Turbulente Strömungen an der Kante regen vorteilhaft die Bildung einer stehenden Schallwelle im Resonanzraum an.

Vorteilhaft ist eine Ausführungsform, wonach die Pfeiftoneinheit als Mikropfeiftoneinheit ausgebildet ist.

Eine Mikropfeife weist vorteilhaft einen Kanal mit wenigstens einer, vorteilhaft genau einer, Eintrittsöffnung und wenigstens einer, vorteilhaft genau einer, Austrittsöffnung auf. Wird Luft durch das Eintrittsloch eingeblasen bzw. eingebracht, sendet die Mikropfeife vorteilhaft einen Ton mit einer Frequenz aus. Die Frequenz ist vorteilhaft abhängig vom zugeführten Luftdruck und einer Geometrie der Mikropfeife.

Die Luft gelangt vorteilhaft durch das weiter oben beschriebene Durchwalken des Verformkörpers durch die Eintrittsöffnung in die Pfeiftoneinheit.

Die Pfeiftoneinheit kann Kunststoff umfassen.

Die Pfeiftoneinheit kann auch aus Kunststoff bestehen.

Vorteilhaft ist eine Ausführungsform, wonach die Pfeiftoneinheit eine geprägte Polymerfolie umfasst.

Eine Polymerfolie kann beispielsweise durch Ultraschallheißprägen gefertigt werden. Ein Verformkörper - insbesondere aus Silikon - kann gegossen werden. Eine derartige Herstellung ist günstig und schnell.

Auch eine andersartige Herstellung ist möglich.

Die Lösung der oben gestellten Aufgabe gelingt ferner durch Anspruch 10, d. h. eine Wellenkupplung zur Kupplung einer ersten Welle und einer zweiten Welle, aufweisend:
- eine erste Kupplungsnabe zur Verbindung mit der ersten Welle mit wenigstens einer Mitnahmeklaue,
- eine zweite Kupplungsnabe zur Verbindung mit der zweiten Welle mit wenigstens einer Mitnahmeklaue,
- einen Zahnkranz,
- einen Schallgenerator.

Die Wellenkupplung wird in der Figurenbeschreibung näher erläutert.

Vorteilhaft ist eine Ausführungsform, wonach die Wellenkupplung als Elastomerkupplung ausgebildet ist.

Ein Vorteil einer Elastomerkupplung ist eine große Elastizität, die durch elastische Elemente im Inneren gewährleistet wird. Dies wirkt sich vorteilhaft auf eine Schwingungsdämpfung aus.

Vorteilhaft ist eine Ausführungsform, wonach der Schallgenerator an und/oder innerhalb und/oder auf einem Zahnkranz der Wellenkupplung ausgebildet ist.

Der Schallgenerator kann Teil des Zahnkranzes sein. Dies ist besonders platzsparend.

Der Schallgenerator kann auch auf dem Zahnkranz angeordnet sein.

Die Lösung der oben gestellten Aufgabe gelingt ferner durch Anspruch 13, d. h. ein System, aufweisend eine Wellenkupplung und eine Empfangseinheit, wobei die Empfangseinheit zum Empfang von Schallwellen ausgebildet ist.

Die Empfangseinheit weist vorteilhaft ein Mikrophon auf.

Das System wird in der Figurenbeschreibung näher erläutert.

Die Lösung der oben gestellten Aufgabe gelingt zudem durch Anspruch 14, d. h. ein Verfahren zur Erkennung und Signalisierung einer Fehlausrichtung einer ersten Welle zu einer zweiten Welle mit einer Wellenkupplung, wobei der Verformkörper bei Fehlausrichtung verformt wird, wobei die Pfeiftoneinheit einem Gasstrom, insbesondere Luftsrom, ausgesetzt ist, wobei durch die Pfeiftoneinheit eine Schallwelle gebildet wird.

Die Schallwelle wird vorteilhaft von der Empfangseinheit erfasst.

Jedoch kann die Schallwelle auch von einem menschlichen Ohr erfasst werden.

Vorteilhaft ist eine Ausführungsform, wonach die Schallwelle von der Empfangseinheit empfangen wird und in ein von einem Benutzer wahrnehmbares Signal gewandelt wird, wobei das Signal dem Benutzer angezeigt wird.

Das Signal kann dem Benutzer z. B. visuell angezeigt werden. Auch eine Anzeige mittels eines (für den Benutzer hörbaren) Tons ist denkbar.

Die Erfindung bietet den Vorteil, dass eine mangelnde Fluchtung erkennbar ist und Schäden an Welle und Lager verhindert werden können.

Eine exakte Ausrichtung der Wellen ist insbesondere von Vorteil hinsichtlich Verschleiß an Lagern, Dichtungen, Wellen und Wellenkupplungen.

Im Folgenden wird die Erfindung anhand der in den Figuren dargestellten Ausführungsbeispiele näher beschrieben und erläutert. Es zeigen:
- FIG 1 und FIG 2: eine Wellenkupplung,
- FIG 3 und FIG 4: verschiedene Ausgestaltungen eines Systems 100,
- FIG 5: ein Verfahren,
- FIG 6 und FIG 7: einen Schallgenerator.

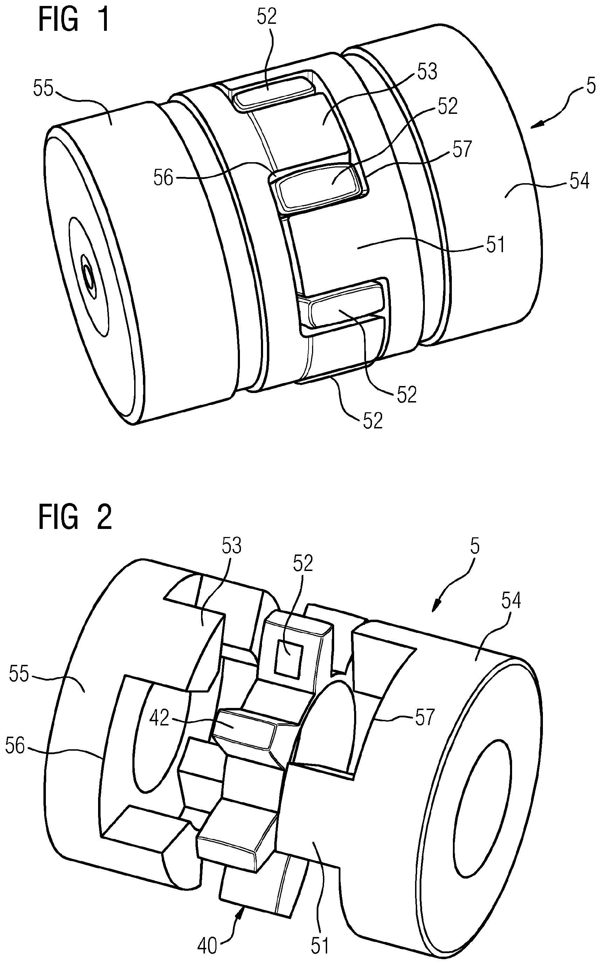

FIG 1 zeigt eine Wellenkupplung 5. Die Kupplung weist einen maschinenseitigen Teil 54 und einen lastseitigen Teil 55 auf.

FIG 2 zeigt die Wellenkupplung 5 in Explosivdarstellung.

Der maschinenseitige Teil (auch: Kupplungsnabe) 54 weist wenigstens eine Mitnahmeklaue 51, vorteilhaft zwei oder mehr beabstandet angeordnete Mitnahmeklauen 51, auf. Zwischen zwei Mitnahmeklauen ist eine Lücke 57.

Der lastseitige Teil (auch: Kupplungsnabe) 55 weist wenigstens eine Mitnahmeklaue 53, vorteilhaft zwei oder mehr beabstandet angeordnete Mitnahmeklauen 53, auf. Zwischen zwei Mitnahmeklauen ist eine Lücke 56.

Die Teile 54 und 55 sind in der Figur derart angeordnet, dass eine Mitnahmeklaue in die Lücke 56 greift.

Die Teile 54 und 55 sind in der Figur derart angeordnet, dass eine Mitnahmeklaue 53 in die Lücke 57 greift.

Die Mitnahmeklauen 51 bzw. 53 weisen in der Figur eine Kontur auf, die vorteilhaft nicht passgenau in die Lücke 56 bzw. 57 greift. Es befindet sich dazwischen ein Zwischenraum (auch: Spalt, Schlitz, Fuge), in welchem vorteilhaft ein Verformkörper 52 angeordnet ist.

Der Verformkörper 52 kann Teil eines Zahnkranzes 40 (siehe FIG 2) sein, in den Zahnkranz 40 integriert sein oder an bzw. auf dem Zahnkranz 40 angeordnet sein.

Vorteilhaft ist der Verformkörper 52 in einen Zahn 42 des Zahnkranzes 40 integriert. Der Verformkörper 52 kann auch der Zahn 42 sein. Der Verformkörper 52 kann auch auf dem Zahn 42 angeordnet sein.

Vorteilhaft ist wenigstens ein Verformkörper 52 in der Wellenkupplung 5 enthalten.

Vorteilhaft ist pro Zwischenraum wenigstens ein Verformkörper 52 angeordnet.

Es können jedoch auch zwei oder mehr Verformkörper 52 in einem Zwischenraum angeordnet sein.

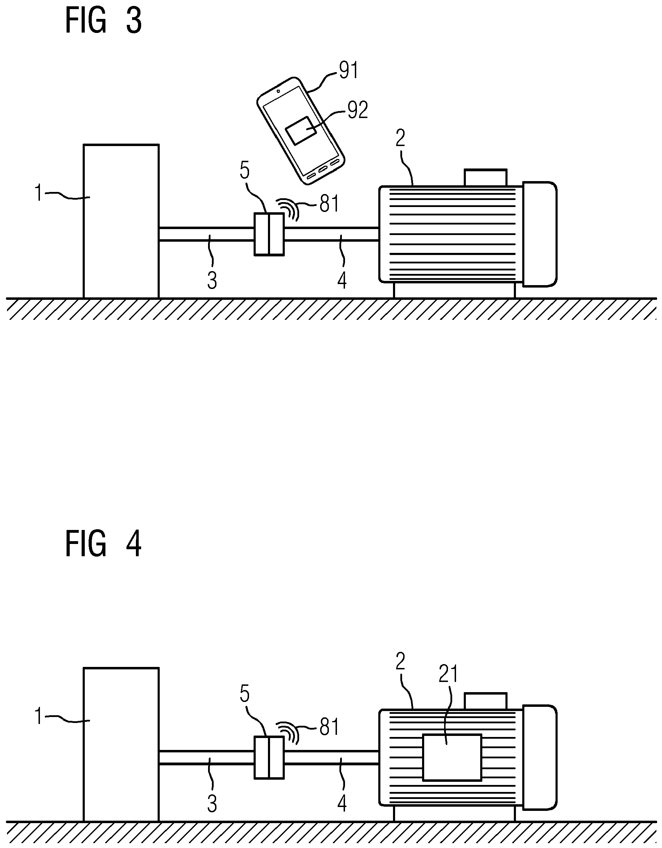

FIG 3 und FIG 4 zeigen verschiedene Ausgestaltungen eines Systems 100, aufweisend eine dynamoelektrische Maschine 2, eine Last 1, eine lastseitige Welle 3, eine maschinenseitige Welle 4 und eine Wellenkupplung 5.

Die Last 1 kann z. B. eine Pumpe oder ein Lüfter sein. Auch andere Arten sind möglich.

Die dynamoelektrische Maschine 2 ist vorteilhaft als dynamoelektrisch rotatorische Maschine ausgebildet.

Die Figuren zeigen, dass eine Signalisierung der Fehlausrichtung mittels eines Pfeiftons, insbesondere Ultraschallpfeiftons, gelingt.

Bevorzugt weist das System 100 hierbei eine Einheit 21 (siehe FIG 4) auf, die zum Empfang von Schallwellen ausgebildet ist. Dies kann beispielsweise ein Smart Sensor sein.

Ein Smart Sensor ist ein Sensor, der vorteilhaft auf Mikrotechnik, Mikrosystemtechnik und/oder Nanotechnologie basiert und vorzugsweise zur Messgrößenerfassung und/oder Signalaufbereitung und/oder Signalverarbeitung eingerichtet ist.

Der Smart Sensor weist z. B. einen Mikroprozessor oder Mikrocontroller sowie vorteilhaft wenigstens eine, vorzugsweise standardisierte, Schnittstelle zur Kommunikation mit einem übergeordneten System auf. Der Smart Sensor ist kostengünstig, verbessert eine Flexibilität des Systems 100 und ermöglicht eine Dezentralisierung.

Die Einheit 21 ist in der Figur an der Maschine 2 angeordnet.

Der Empfang von Schall kann auch mittels anderer Einheiten, die in mobilen Endgeräten, z. B. Smartphones, enthalten sind, bewerkstelligt werden.

Der Verformkörper 52 ist dergestalt, dass bei Verspannung bzw. Fehlausrichtung der Wellen 3 und 4 Schall emittiert wird.

Die Fehlausrichtung der Wellen 3 und 4 ruft eine mechanische Kraft hervor, welche sich auf den Verformkörper 52 auswirkt. Dies äußert sich vorteilhaft durch Druck auf den Verformkörper 52.

Der Verformkörper 52 wird dadurch derart verformt, dass - auch durch eine Rotation der Wellenkupplung 5 - ein Geräusch hervorgerufen wird. Dies gelingt mittels einer Pfeiftoneinheit.

Ein Benutzer kann das Geräusch auditiv wahrnehmen.

Bevorzugt ist jedoch eine Ausführungsform, wonach der Verformkörper 52 eine oder mehrere Ultraschallpfeifen aufweist.

FIG 3 zeigt, dass eine Erfassung des Geräuschs mittels einer Geräuscherkennungseinheit 92 gelingt. Die Geräuscherkennungseinheit 92 kann in einem mobilen Endgerät, z. B. einem Smartphone, enthalten sein.

Alternativ oder zusätzlich kann, wie in FIG 4 gezeigt, das System 100 eine Einheit 21 aufweisen, die zum Empfang von Geräuschen, insbesondere Ultraschallgeräuschen, ausgebildet ist. Dies kann beispielsweise ein Smart Sensor sein.

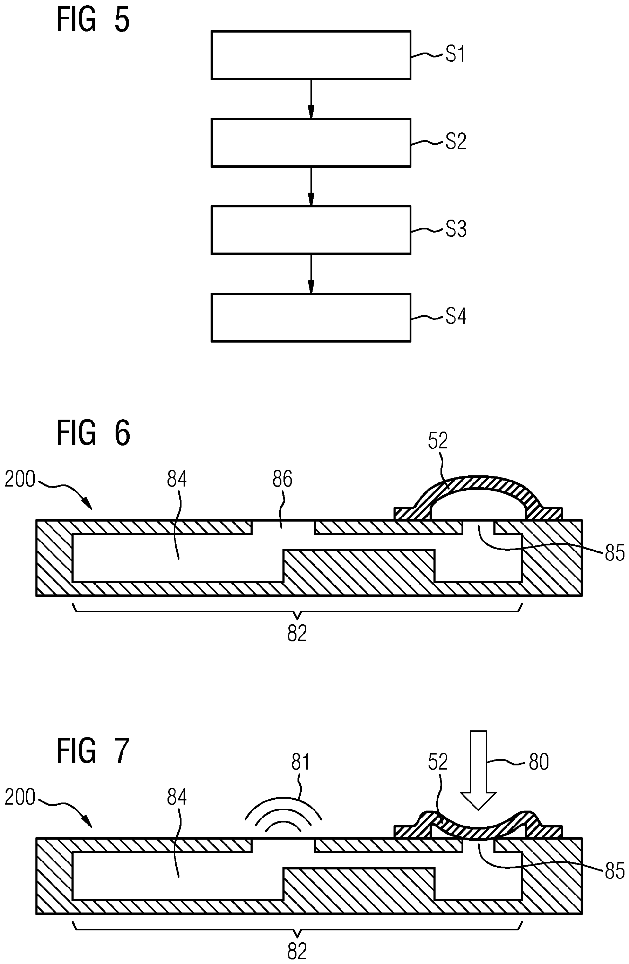

FIG 5 zeigt ein Verfahren.

In einem Verfahrensschritt S1 sind die maschinenseitige Welle und die lastseitige Welle fehlausgerichtet.

Eine Fehlausrichtung kann beim Kuppeln der Wellen entstehen. Ferner kann eine Fehlausrichtung auch durch eine Fundamentsenkung entstehen.

Die Fehlausrichtung führt zu einer Verspannung der Wellen.

In einem Verfahrensschritt S2 wird der Verformkörper aufgrund der Fehlausrichtung verformt.

In einem Verfahrensschritt S3 ist die Pfeiftoneinheit einem Gasstrom ausgesetzt.

In einem Verfahrensschritt S4 wird durch die Pfeiftoneinheit eine Schallwelle gebildet.

FIG 6 zeigt einen Schallgenerator 200.

Die Figur zeigt den Verformkörper 52, eine Eintrittsöffnung 85, eine Austrittsöffnung 86, einen Hohlraum 84, eine Austrittsöffnung 86 und eine Pfeiftoneinheit 82.

Der Verformkörper 52 weist in der Figur einen Hohlraum auf.

In FIG 7 ist der Verfomkörper 52 verformt - durch einen Druck 80 - dargestellt. Durch die Verformung wird Gas, insbesondere Luft, in die Eintrittsöffnung 85 gedrückt.

Ein Luftstrom trifft auf eine Kante und die Luft wird in einem anschließenden Hohlraum in Schwingungen versetzt. Turbulente Strömungen an der Kante regen die Bildung einer stehenden Schallwelle im Resonanzraum an. Auf diese Weise entsteht eine Schallwelle, insbesondere ein Pfeifton, 81.

Die Fehlausrichtung führt vorteilhaft zu einem Schlingern der Kupplung, somit gelangt immer wieder Luft in den Verformkörper, die anschließend in die Eintrittsöffnung gedrückt wird.

Die Pfeiftoneinheit 82 ist vorteilhaft als geprägte Polymerfolie ausgebildet.

Der Schallgenerator 200 kann in einen bei Fehlausrichtung beeinträchtigten Bereich der Wellenkupplung integriert werden. Bei einer Elastomerkupplung bietet sich hierzu ein Elastomerkranz an.

Bei dynamischer Belastung durch Fehlausrichtung emittieren die Strukturen Schall, insbesondere Ultraschall, der mit einem Mikrophon aufgezeichnet werden kann.

Mikrophone in Mobiltelefonen (siehe FIG 3) sind beispielsweise in der Lage, bis in den Ultraschallbereich zu messen. Damit kann die Geräuschauswertung beispielsweise über eine Smartphone-App erfolgen.

Alternativ können auch fest installierte Sensoren wie Smart Sensoren (siehe FIG 4) an der Maschine, insbesondere an dem Elektromotor, mit wenigstens einem Mikrophon oder mehreren Mikrophonen ausgerüstet sein. So können Geräusche aufgezeichnet und ausgewertet werden. Geräusche im Ultraschallbereich haben den Vorteil, dass eine Trennung von Umgebungsgeräuschen leicht möglich ist.

Der Schallgenerator 200 ist vorteilhaft in die Wellenkupplung integriert. Dies ist sehr platzsparend und kompakt.

Die Erfindung bietet viele Vorteile. Eine Fehlausrichtung ist direkt und ohne aufwändige Instrumentierung erkennbar.

Es ist keine externe Energieversorgung nötig.

Langfristige Lagerschädigung an Motor oder Last durch dynamische Belastung bei Fehlausrichtung sind vermeidbar.

## Patentansprüche

1. Schallgenerator (200) für eine Wellenkupplung (5), aufweisend:
- wenigstens einen Verformkörper (52) und
- wenigstens eine Pfeiftoneinheit (82), wobei bei Druck auf den Verformkörper (52) sich der Verformkörper (52) derart verformt, dass die Pfeiftoneinheit (82) einem Gasstrom, insbesondere Luftstrom, ausgesetzt ist, wobei die Pfeiftoneinheit (82) derart ausgebildet ist, dass sie bei Auftreffen des Gasstroms eine Schallwelle (81) erzeugt.

2. Schallgenerator (200) nach Anspruch 1, wobei als Schallwelle (81) eine Ultraschallwelle erzeugbar ist.

3. Schallgenerator (200) nach einem der vorhergehenden Ansprüche, wobei der Verformkörper (52) wenigstens ein Elastomer aufweist.

4. Schallgenerator (200) nach einem der vorhergehenden Ansprüche, wobei die Pfeiftoneinheit (82) eine Eintrittsöffnung (85) zum Eintritt eines Gases, insbesondere Luft, aufweist.

5. Schallgenerator (200) nach einem der vorhergehenden Ansprüche, wobei die Pfeiftoneinheit (82) eine Austrittsöffnung (86) zum Austritt der Schallwelle (81) aufweist.

6. Schallgenerator (200) nach einem der vorhergehenden Ansprüche, wobei die Pfeiftoneinheit (82) wenigstens eine Kante zur Bildung einer stehenden Welle aufweist.

7. Schallgenerator (200) nach einem der vorhergehenden Ansprüche, wobei die Pfeiftoneinheit (82) wenigstens einen Resonanzraum (84) aufweist.

8. Schallgenerator (200) nach einem der vorhergehenden Ansprüche, wobei die Pfeiftoneinheit (82) als Mikropfeiftoneinheit ausgebildet ist.

9. Schallgenerator (200) nach einem der vorhergehenden Ansprüche, wobei die Pfeiftoneinheit (82) eine geprägte Polymerfolie umfasst.

10. Wellenkupplung (5) zur Kupplung einer ersten Welle (3) und einer zweiten Welle (4), aufweisend:
- eine erste Kupplungsnabe (55) zur Verbindung mit der ersten Welle (3) mit wenigstens einer Mitnahmeklaue (53),
- eine zweite Kupplungsnabe (54) zur Verbindung mit der zweiten Welle (4) mit wenigstens einer Mitnahmeklaue (51),
- einen Zahnkranz (40),
- einen Schallgenerator (200) nach einem der Ansprüche 1 bis 9.

11. Wellenkupplung (5) nach Anspruch 11, wobei die Wellenkupplung (5) als Elastomerkupplung ausgebildet ist.

12. Wellenkupplung (5) nach einem der Ansprüche 10 oder 11, wobei der Schallgenerator (200) an und/oder innerhalb und/oder auf einem Zahnkranz (40) der Wellenkupplung (5) ausgebildet ist.

13. System (100), aufweisend eine Wellenkupplung (5) nach einem der Ansprüche 10 bis 12 und eine Empfangseinheit (21, 92), wobei die Empfangseinheit (21, 95) zum Empfang von Schallwellen ausgebildet ist.

14. Verfahren zur Erkennung und Signalisierung einer Fehlausrichtung einer ersten Welle (3) zu einer zweiten Welle (4) mit einer Wellenkupplung (5) nach einem der Ansprüche 11 bis 13, wobei der Verformkörper (52) bei Fehlausrichtung verformt wird, wobei die Pfeiftoneinheit (82) einem Gasstrom, insbesondere Luftsrom, ausgesetzt ist, wobei durch die Pfeiftoneinheit (82) eine Schallwelle (81) gebildet wird.

15. Verfahren nach Anspruch 14, wobei die Schallwelle (81) von der Empfangseinheit (21, 95) empfangen wird und in ein von einem Benutzer wahrnehmbares Signal gewandelt wird, wobei das Signal dem Benutzer angezeigt wird.
